# FASCICULE DE BREVET EUROPEEN

(11) **EP 4 188 669 B1**
(45) Date de publication et mention de la délivrance du brevet: **28.08.2024**
(21) Numéro de dépôt: 21749646.2
(22) Date de dépôt: 28.07.2021
(51) Int. Cl.: B29C 43/34, B29C 35/04, B29C 43/52, B29C 43/48, B29B 7/82, B29B 7/16, B29B 7/58, B29B 7/74, B29B 7/94, C08L 75/04, B29D 99/00, B29K 21/00, B29K 75/00, B29K 105/26, B29L 31/30, B29L 31/00, C08L 19/00

(54) **PROCÉDÉ ET DISPOSITIF DE FABRICATION D'UN TAPIS À BASE DE CAOUTCHOUC RECYCLÉ**
VERFAHREN UND VORRICHTUNG ZUR HERSTELLUNG EINER MATTE AUS ALTGUMMI
METHOD AND DEVICE FOR MANUFACTURING A MAT FROM RECYCLED RUBBER

(30) Priorité: 29.07.2020 BE 202005552
(43) Date de publication de la demande: 07.06.2023
(73) Titulaire: Rubbergreen Industrie, 7080 Frameries (BE)
(72) Inventeur: PRUD'HOMME, Olivier, 1300 Wavre (BE)
(74) Mandataire: Calysta NV
(86) Numéro de dépôt international: PCT/EP2021/071187
(87) Numéro de publication internationale: WO 2022/023434

(56) Documents cités:
- WO-A1-2009/027074
- CH-A2- 710 216
- FR-A- 1 158 275

## Description

La présente invention concerne un procédé de fabrication d'un tapis à base de caoutchouc recyclé, un dispositif pour sa mise en oeuvre ainsi que les produits ainsi obtenus.

La présente invention se rapporte plus particulièrement à un procédé de fabrication d'un tapis à base de caoutchouc recyclé comprenant les étapes de :
- malaxage de caoutchouc recyclé en grains ou en copeaux et d'au moins un liant de manière à obtenir un mélange caoutchouc-liant granulaire,
- transfert dudit mélange caoutchouc-liant sur une bande transporteuse qui, en déplacement, présente un sens d'avancement,
- compression dudit mélange caoutchouc-liant sur la bande transporteuse à une température de durcissement du mélange caoutchouc-liant, et
- addition d'eau liquide audit mélange caoutchouc-liant avant l'étape de compression, l'eau additionnée entraînant, au contact du liant, un durcissement de celui-ci pendant la compression à ladite température de durcissement, avec obtention d'un tapis à base de caoutchouc recyclé aggloméré (voir par exemple DE 102007040614).

Par les termes caoutchouc recyclé, on entend, selon la présente invention, du caoutchouc usagé provenant de pneus de camion, de vélo, de voiture, d'avion, mais aussi tout type de déchet à base de caoutchouc.

Des procédés de fabrication d'un tapis à base de caoutchouc recyclé sont bien connus de l'état de la technique (voir, par exemple, DE3017899, DE4113056, FR1158275 et WO2009027074).

Dans ces documents, le caoutchouc recyclé est, sous forme déchiquetée ou sous forme de copeaux, mélangé avec un liant, et ce mélange caoutchouc-liant est envoyé dans une presse comprenant deux bandes chauffantes, une bande chauffante supérieure et une bande chauffante inférieure pour former le tapis à base de caoutchouc recyclé aggloméré sous compression à une température élevée. De la vapeur d'eau ou de catalyseur est, à travers les bandes chauffantes supérieures et/ou inférieures et la structure de la presse, injectée dans le mélange caoutchouc-liant, pour permettre au mélange caoutchouc-liant de durcir et de former un tapis à base de caoutchouc recyclé aggloméré.

L'étape de compression est donc compliquée à mettre en oeuvre. Elle nécessite une installation de pressage complexe et coûteuse à la fabrication.

En effet, la presse doit comprendre des moyens pour chauffer les bandes chauffantes et un circuit dans lequel circule la vapeur d'eau ou les accélérateurs de réaction. L'eau ou les accélérateurs de réaction doivent donc être amenés préalablement à l'état de vapeurs ou d'aérosols et ils sont ensuite vaporisés dans le mélange par un système de buses présent dans la ou les bande(s) chauffante(s).

Un autre problème régulièrement rencontré réside dans le dépôt du mélange caoutchouc-liant sur la bande transporteuse. Il est en effet, la plupart du temps, difficile de réaliser un dépôt homogène sur la bande transporteuse.

L'invention a pour but de pallier les inconvénients de l'état de la technique en procurant un procédé simple pour la fabrication de tapis à base de caoutchouc recyclé aggloméré qui soient de qualité uniforme et résistante, de manière rapide et économique. Ce procédé doit être peu énergivore et permettre la mise en oeuvre de dispositifs simples à construire et à agencer.

Pour résoudre ce problème, il est prévu suivant l'invention un procédé de fabrication de tapis à base de caoutchouc tel qu'indiqué au début, dans lequel l'étape de transfert comprend un dépôt du mélange caoutchouc-liant sur la bande transporteuse suivant un mouvement de va-et-vient transversalement audit sens d'avancement, ledit procédé comprenant, en outre, après cette étape de dépôt, une étape de nivellement dudit mélange caoutchouc-liant sur la bande transporteuse en cours d'avancement, à une épaisseur uniforme prédéterminée.

Le dépôt en va-et-vient susdit présente l'avantage de répartir le mélange caoutchouc-liant de manière homogène sur la largeur de la bande, transversalement, rapidement et facilement. On évite, comme dans la technique antérieure, un tassement du mélange à l'endroit du dépôt, généralement au centre de la bande transporteuse. En effet sous l'effet de la chute depuis le dispositif d'alimentation au centre de la bande, la matière déposée devient là plus dense que sur ses bords latéraux. L'étape de nivellement qui a lieu après ce dépôt permet alors d'uniformiser l'épaisseur du mélange caoutchouc-liant sur la largeur de la bande. Ces opérations permettent ainsi d'obtenir un mélange caoutchouc-liant de même densité et de même épaisseur en largeur, avant sa pénétration dans la presse. Le tapis comprimé obtenu est ainsi de grande qualité, car parfaitement homogène. Le dépôt susdit peut être effectué pendant l'avancement de la bande ou lorsque la bande est à l'arrêt.

Il est connu que l'eau est un catalyseur de durcissement pour la réaction envisagée entre le caoutchouc recyclé et le liant. Comme déjà dit, habituellement cette eau est fournie au mélange sous forme de vapeur à l'intérieur de la presse, ce qui rend le procédé et le dispositif pour sa mise en oeuvre très complexes et coûteux. La présente invention prévoit au contraire une alimentation du mélange caoutchouc-liant en eau liquide, et cela avant l'étape de compression.

Avantageusement, ledit au moins un liant est choisi dans le groupe des liants thermodurcissables liquides. Il peut par exemple consister en un polyuréthanne.

En fonction de la vitesse de réaction du mélange caoutchouc recyclé et liant, l'addition d'eau liquide pourra avoir lieu à divers moments. Suivant un mode de réalisation de l'invention, l'étape d'addition d'eau liquide s'effectue au cours du malaxage dudit mélange caoutchouc-liant. Suivant un autre mode de réalisation de l'invention, l'étape d'addition d'eau liquide s'effectue par pulvérisation sur ledit mélange caoutchouc-liant après l'étape de nivellement à ladite épaisseur uniforme prédéterminée et avant l'étape de compression. Il a été mis en évidence, dans le cadre de la présente invention, que l'étape de pulvérisation d'eau sur le mélange caoutchouc-liant après l'étape de nivellement nécessite un simple étalement d'un film d'eau non chauffée sur la surface supérieure du mélange caoutchouc-liant. Le film d'eau est déposé sur la surface supérieure du mélange caoutchouc-liant avant l'étape de compression par un pulvérisateur d'eau.

Lorsque le mélange caoutchouc-liant, dans lequel de l'eau liquide est mélangée ou qui est recouvert d'un film d'eau liquide, avance entre les bandes chauffantes et chauffées de la presse, cette dernière se referme et la compression commence. L'eau chauffée présente va alors diffuser dans toute l'épaisseur du mélange caoutchouc-liant, généralement sous forme de vapeur, et permettre le durcissement du liant. Un tapis à base de caoutchouc recyclé aggloméré résistant et de qualité uniforme est ainsi obtenu de manière aisée.

Plus besoin d'une presse comprenant différents circuits dont l'un pour faire circuler de la vapeur d'eau ou des accélérateurs de réaction. Une presse comprenant une première bande et une deuxième bande recouvrant respectivement une première plaque et une deuxième plaque chauffantes suffit à obtenir un tapis à base de caoutchouc recyclé aggloméré de qualité uniforme et résistant.

De plus, ce procédé est peu énergivore car la température utilisée pour permettre l'évaporation de l'eau est la température à laquelle la presse est chauffée. Il ne s'agit pas d'eau chauffée par un autre système que la presse pour former la vapeur devant circuler dans un circuit secondaire. Il en ressort que le procédé de fabrication d'un tapis à base de caoutchouc recyclé permet la mise en place de dispositifs simples à construire et à agencer.

De préférence, ledit au moins un liant représente 4 % à 12 % en poids, de préférence 4 % à 8 %, et plus particulièrement 5 % à 6,5 %, du mélange caoutchouc-liant.

De manière avantageuse, ledit caoutchouc recyclé en grains ou en copeaux représente de 88 % à 96 % en poids, de préférence, 92 % à 95,5 %, et plus particulièrement de 93,5 % à 95 % du mélange caoutchouc-liant.

Suivant un mode de réalisation particulier de l'invention, l'étape de nivellement s'effectue par passage du mélange caoutchouc-liant sous une règle qui définit l'épaisseur prédéterminée du mélange à comprimer. De préférence cette règle est capable d'effectuer un mouvement de rotation autour d'un axe horizontal et d'être ajustée dans une position inclinée par rapport à un plan vertical. Cet agencement permet d'exercer une pression vers le bas à la surface du mélange pendant son passage et d'éviter toute inégalité dans celle-ci. Dans le même but, l'étape de nivellement peut s'effectuer par passage du mélange caoutchouc-liant sous une règle effectuant un mouvement de va-et-vient transversalement audit sens d'avancement, ce qui produit un effet de talochage sur la surface du mélange. Ces deux mesures peuvent être envisagées simultanément. La hauteur de la règle, l'inclinaison de la règle, son mouvement en va-et-vient dépendent de la nature et des caractéristiques de la matière que l'on utilise. Par exemple, de la densité apparente du mélange, de la granulométrie des granules, de la quantité de liant, entre autres.

Avantageusement, l'étape de nivellement comprend en outre un lissage du mélange caoutchouc-liant sur ladite bande transporteuse. Cela permet d'obtenir une surface supérieure lisse du mélange caoutchouc-liant avant que l'étape de compression ne soit effectuée. Le tapis à base de caoutchouc recyclé n'a alors pas besoin d'être pelé après compression pour obtenir une surface lisse. Cela est déjà obtenu lors de ladite étape de nivellement. Un meilleur nivellement donne une meilleure homogénéité de la densité du tapis une fois cuit, suivant la largeur et la longueur.

La compression est avantageusement, mais non exclusivement, effectuée selon un mode d'avancement pas à pas.

De préférence, la compression est effectuée à une température comprise entre 60 et 150 °C, avantageusement entre 90 °C et 120 °C, et de préférence entre 105 °C et 115 °C.

De préférence, le temps de compression total est compris entre 3 min et 15 min. Par le temps de compression total, on entend le temps de compression pour que la totalité du mélange caoutchouc liant soit durci en un tapis à base de caoutchouc recyclé aggloméré.

Suivant un mode de réalisation préférentiel du procédé selon l'invention, l'étape de compression comprend un pressage du mélange caoutchouc-liant simultanément suivant une direction verticale et suivant une direction horizontale. Par la compression verticale, le tapis acquiert une épaisseur inférieure à l'épaisseur prédéterminée du mélange caoutchouc-liant introduit dans la presse. Par la compression horizontale les bords du mélange à durcir sont pressés l'un vers l'autre ce qui améliore encore l'homogénéité de la densité du tapis obtenu en sortie de presse.

D'autres modes de réalisation d'un procédé de fabrication d'un tapis à base de caoutchouc recyclé sont indiqués dans les revendications annexées.

L'invention a aussi pour objet un dispositif de fabrication de tapis à base de caoutchouc recyclé comprenant :
- un mélangeur qui est alimenté en caoutchouc recyclé granulaire ou en copeaux et en au moins un liant, et dans lequel est formé un mélange caoutchouc-liant granulaire,
- une bande transporteuse présentant deux bords longitudinaux et agencée pour transporter ledit mélange caoutchouc-liant vers une presse, suivant un sens d'avancement, et
- un système d'addition d'eau liquide audit mélange caoutchouc-liant avant pénétration dans la presse,
ladite presse comprenant une entrée, une sortie, une première bande et une deuxième bande recouvrant respectivement une première plaque et une deuxième plaque chauffantes, et étant agencée pour compresser ledit mélange caoutchouc-liant à une température de durcissement du mélange caoutchouc-liant, et former un tapis à base de caoutchouc recyclé aggloméré.

Suivant l'invention, ledit mélangeur est monté de manière déplaçable suivant un mouvement de va-et-vient entre les bords longitudinaux de la bande transporteuse, transversalement au sens d'avancement de celle-ci, et est agencé de manière à pouvoir, pendant son déplacement, déposer ledit mélange caoutchouc-liant sur ladite bande transporteuse et ledit dispositif comprend en outre un système de nivellement agencé pour produire un mélange caoutchouc-liant déposé présentant une épaisseur uniforme prédéterminée, avant l'entrée dans la presse.

L'agencement du mélangeur présente l'avantage que le dépôt est effectué de manière rapide, simple et efficace. L'entièreté de la largeur de la bande transporteuse est recouverte par une couche de mélange caoutchouc-liant relativement uniforme, ce qui permet d'obtenir un pré-nivellement où la densité du mélange déposé sur la bande est homogène.

Suivant une forme de réalisation de l'invention, le système de nivellement comprend au moins une règle en dessous de laquelle le mélange caoutchouc-liant doit passer pendant son transport sur la bande transporteuse, cette au moins une règle étant agencée pour réguler le mélange à ladite épaisseur uniforme prédéterminée. Avantageusement, ladite au moins une règle est agencée de manière à pouvoir pivoter autour d'un axe horizontal et être ajustée dans une position inclinée par rapport à un plan vertical. Ladite au moins une règle peut aussi être agencée de manière à pouvoir effectuer un mouvement de va-et-vient transversalement audit sens d'avancement, ce qui produit un effet de talochage en surface du mélange déposé. Ces organes permettent d'obtenir des tapis dont la densité est homogène suivant leur hauteur, largeur et longueur.

Suivant une forme de réalisation particulière de réalisation de l'invention, le système d'addition d'eau liquide susdit comprend un pulvérisateur d'eau, situé au-dessus de ladite bande transporteuse, entre ledit système de nivellement et l'entrée de ladite presse, ce pulvérisateur d'eau étant agencé pour disperser de l'eau liquide en surface du mélange caoutchouc-liant nivelé, avant sa pénétration dans la presse.

Il est apparu de manière particulièrement avantageuse que le pulvérisateur d'eau, en déposant un film d'eau sur la surface supérieure du mélange caoutchouc-liant, va permettre d'obtenir un tapis à base de caoutchouc recyclé aggloméré de qualité uniforme et résistant.

On peut aussi envisager que le malaxeur soit alimenté en eau par une source d'eau liquide.

L'emplacement du système d'addition d'eau liquide est choisi en fonction de la vitesse de réaction du mélange comprenant les granules de caoutchouc et le liant, en présence d'eau.

Le film d'eau qui est déposé sur la surface supérieure du mélange caoutchouc-liant avant l'étape de compression ou l'eau qui a été ajoutée au mélange dans le mélangeur va être chauffée, dans la presse, lors de la compression du mélange caoutchouc-liant et diffuser ainsi dans toute l'épaisseur du mélange caoutchouc-liant. La température développée par une première bande et une deuxième bande recouvrant respectivement une première plaque et une deuxième plaque chauffantes va permettre l'accélération du durcissement du liant au contact de l'eau chauffée diffusée, généralement sous forme de vapeur et donc la formation du tapis à base de caoutchouc recyclé aggloméré.

Ce système d'addition d'eau liquide simplifie énormément le dispositif de fabrication de tapis à base de caoutchouc recyclé aggloméré sans contrebalancer la qualité de ce dernier. En effet, la presse qui sera utilisée est une presse comprenant une première bande et une deuxième bande recouvrant respectivement une première plaque et une deuxième plaque chauffantes. Celles-ci ne vont pas nécessiter l'ajout d'éléments spécifiques tels que des buses pour l'injection de vapeur d'eau depuis l'extérieur de la presse.

De préférence, le système de nivellement du dispositif suivant l'invention comprend au moins un peigne rotatif agencé pour lisser ledit mélange caoutchouc-liant au cours de son nivellement.

Ce système de nivellement présente l'avantage que le mélange caoutchouc-liant homogène ait une surface lisse qui ne nécessitera pas d'être pelée après la compression.

Suivant une forme de réalisation de l'invention, la presse comprend, aux bords longitudinaux des bandes, des bords de rive déplaçables l'un vers l'autre à l'intérieur de la presse pour presser le mélange caoutchouc-liant suivant une direction horizontale dans le sens de la largeur. De cette manière le mélange est comprimé non seulement verticalement, mais aussi horizontalement ce qui améliore encore davantage l'uniformité de densité recherchée du tapis produit.

Suivant une forme de réalisation, le dispositif comprend, en outre, une trémie contenant ledit caoutchouc recyclé en grains ou en copeaux agencée pour déboucher dans le mélangeur. On peut prévoir que cette trémie soit suspendue sur un peson. Lorsque la trémie est suspendue sur un peson, cela permet de peser directement le caoutchouc dans la trémie. Cela présente l'avantage que la quantité de caoutchouc est mesurée précisément, lorsque la trémie est directement reliée au mélangeur, et qu'il n'y a pas de perte de caoutchouc lors d'un transvasement de la trémie dans le mélangeur. De préférence, le dispositif selon l'invention comprend, en outre, un réservoir qui contient ledit au moins un liant sous forme liquide et qui est muni d'un moyen de pompage agencé pour alimenter le mélangeur.

Ladite première bande et ladite deuxième bande recouvrant respectivement ladite première plaque et ladite deuxième plaque chauffantes de la presse peuvent être fabriquées avec une matière résistante à la température, au déchirement et antiadhésive. Cette matière peut être par exemple le polytétrafluoroéthylène (PTFE).

Avantageusement, le dispositif comprend en outre des rouleaux de transport qui supportent le tapis à base de caoutchouc recyclé aggloméré sortant de la presse. Le dispositif comprend de préférence une guillotine agencée pour couper ledit tapis à base de caoutchouc recyclé aggloméré à une longueur déterminée, la guillotine étant située en aval de la presse. Cela permet d'obtenir des tapis à base de caoutchouc recyclé aggloméré de taille variable. Dans une variante, le dispositif selon la présente invention comprend en outre un enrouleur agencé pour enrouler ledit tapis à base de caoutchouc recyclé aggloméré.

Il faut noter que, selon les circonstances, la bande transporteuse peut effectuer un avancement pas à pas ou plutôt en mode continu.

D'autres formes de réalisation du dispositif de fabrication d'un tapis à base de caoutchouc recyclé sont indiquées dans les revendications annexées.

D'autres caractéristiques, détails et avantages de l'invention ressortiront de la description donnée ci-après, à titre non limitatif et en faisant référence aux dessins annexés.

La figure 1 représente une vue en perspective d'un dispositif selon la présente invention.

Les figures 2 et 3 représentent deux vues en perspective différentes de la partie du dispositif illustré sur la figure 1, qui, suivant le sens d'avancement de la bande transporteuse, est située avant la presse.

La figure 4 représente une vue en perspective partiellement brisée d'une autre forme de réalisation de dispositif suivant l'invention.

Sur les figures, les éléments identiques ou analogues portent les mêmes références.

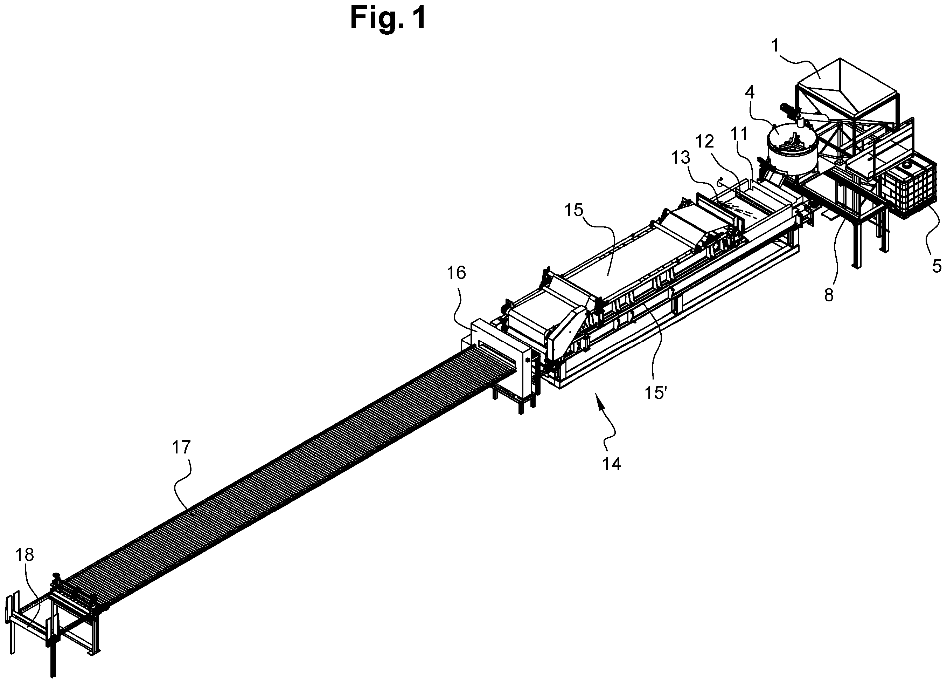

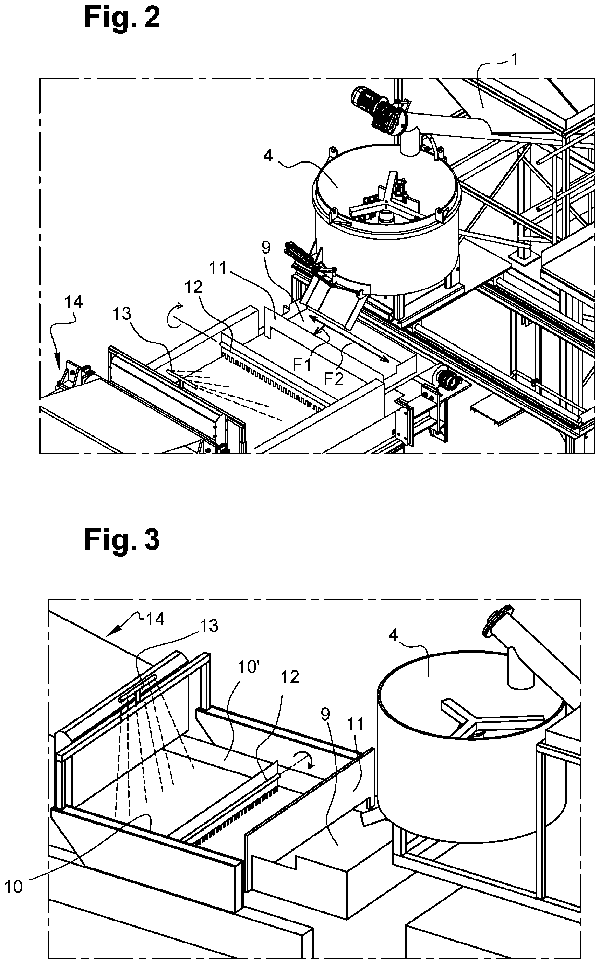

Le dispositif illustré aux figures 1, 2 et 3 comprend une trémie 1 suspendue sur peson et contenant du caoutchouc recyclé granulaire, cette trémie 1 débouchant directement dans un mélangeur 4. Un réservoir 5 contient du polyuréthanne qui est le liant sous forme liquide. Ce réservoir 5 est muni d'un moyen de pompage usuel, non représenté, qui est agencé pour alimenter le mélangeur 4 en polyuréthanne. Ce moyen de pompage va permettre de pomper la quantité précise de polyuréthanne dans le mélangeur 4 en fonction de la quantité de caoutchouc recyclé en grains qui y est amenée.

Le mélangeur 4 illustré est de forme cylindrique avec une surface supérieure ouverte pour permettre à la trémie 1 de déboucher dans le mélangeur 4. Le mélangeur 4 comprend un axe central vertical muni de trois bras pour effectuer un mouvement de malaxage. Le mélangeur 4 est monté sur des rails 8 de manière à pouvoir être déplacé suivant un mouvement de va-et-vient F2, transversalement à une bande transporteuse 9, dont le brin supérieur présente, en fonctionnement, un sens d'avancement F1.

La bande transporteuse 9 reçoit le mélange caoutchouc-polyuréthanne à partir du mélangeur 4. Ce mélange est déposé sur elle, entre ses bords longitudinaux 10, 10', au cours du mouvement de va-et-vient du mélangeur 4, transversalement à la bande transporteuse 9, elle-même en cours d'avancement. Le dépôt est ainsi uniforme et présente une densité relativement homogène sur la largeur de la bande.

Le dispositif comprend, sur la bande transporteuse, entre le mélangeur 4 et une presse 14, un système de nivellement comprenant une règle 11 agencée pour déterminer une première épaisseur dudit mélange caoutchouc-polyuréthanne et un peigne rotatif 12 agencé pour lisser le mélange caoutchouc-polyuréthanne nivelé. La règle 11 est disposée au-dessus de la bande transporteuse 9 à une distance préréglée de celle-ci et le mélange caoutchouc-liant, entraîné par la bande transporteuse 9, est forcé de passer au travers de l'intervalle précis, ainsi déterminé. Le peigne rotatif 12 s'étend sur la largeur de la bande transporteuse 9 et tourne autour d'un axe horizontal situé au-dessus de la bande transporteuse 9 entre la règle 11 et un pulvérisateur d'eau 13. Le peigne rotatif 12 permet le lissage final du mélange caoutchouc-polyuréthanne nivelé. La rotation du peigne 12 rotatif est effectuée selon la présente invention dans le sens anti-horlogique. Cependant, l'homme de métier pourrait imaginer une rotation dans le sens horlogique.

Ce système de nivellement présente l'avantage que le tapis à base de caoutchouc recyclé aggloméré qui sera obtenu ne demandera pas une étape supplémentaire de pelage de sa surface. Elle est déjà lisse.

Dans l'exemple illustré, le pulvérisateur d'eau 13 est en forme de T et est situé sur un encadrement au-dessus de la bande transporteuse 9 et entre le système de nivellement et la presse 14. Ce pulvérisateur d'eau 13 est agencé pour disperser de l'eau liquide sous la forme d'un film en surface du mélange de caoutchouc-polyuréthanne nivelé présent sur la bande transporteuse 9, avant son entrée dans la presse 14. Cela permet d'initier la réaction de durcissement du polyuréthanne avant l'étape de compression sans que le mélange à base de caoutchouc recyclé aggloméré ne durcisse avant sa pénétration dans la presse.

La presse 14 du dispositif illustré comprend une bande supérieure chauffée par une plaque chauffante supérieure 15 et recouvrant celle-ci et la bande transporteuse 9 chauffée par une plaque chauffante inférieure 15' et recouvrant celle-ci. Les plaques chauffantes peuvent être un assemblage de plusieurs petites plaques agencées suivant un système modulaire. Elles sont agencées pour compresser entre elles le mélange caoutchouc-liant suivant une direction verticale, à la température de durcissement du liant, et de cette façon obtenir un tapis à base de caoutchouc recyclé non illustré. Les bandes chauffées par les plaques chauffantes 15 et 15' sont par exemple en Teflon (polytétrafluoroéthylène).

Le dispositif comprend ensuite une guillotine 16 située au-dessus des rouleaux de transport 17. Elle permet de couper le tapis à base de caoutchouc recyclé obtenu à une longueur déterminée.

Les rouleaux de transport 17 sont disposés à la sortie de la presse, en dessous et après la guillotine 16, et sont agencés pour transporter de manière simple le tapis à base de caoutchouc recyclé vers un enrouleur 18 qui permet d'enrouler les tapis à base de caoutchouc recyclé autour d'un axe horizontal.

Dans le dispositif illustré le procédé comprend, de manière courante, une pesée du caoutchouc recyclé en grains ou en copeaux dans une trémie 1, un transfert de la quantité pesée de caoutchouc recyclé en grains ou en copeaux dans le mélangeur 4, une mesure de la quantité de liant, par exemple du polyuréthanne, un transfert de la quantité mesurée de polyuréthanne dans le mélangeur, un malaxage du caoutchouc recyclé en grains ou en copeaux et du polyuréthanne, de manière à obtenir un mélange caoutchouc-polyuréthanne granulaire. Le polyuréthanne utilisé est un liant qui s'active au contact de l'eau et qui est accéléré par la température. Il est avantageusement ajouté à raison de 4 à 12 % en poids du mélange caoutchouc-polyuréthanne.

Ce mélange est ensuite transféré sur une bande transporteuse 9 en mouvement suivant un sens d'avancement F1. Cette étape de transfert comprend un dépôt du mélange caoutchouc-polyuréthanne sur la bande transporteuse 9 en cours d'avancement, ce dépôt étant effectué à partir du mélangeur 4 qui effectue un mouvement de va-et-vient transversalement audit sens d'avancement de la bande transporteuse 9. Il en résulte que le mélange caoutchouc-polyuréthanne est réparti de manière homogène sur la largeur de la bande transporteuse 9 entre ses bords longitudinaux 10,10', en présentant ainsi une densité de matière uniforme sur cette largeur.

Un nivellement et un lissage dudit mélange caoutchouc-polyuréthanne sur la bande transporteuse 9 en cours d'avancement ont ensuite lieu à une première épaisseur prédéterminée à l'aide d'un système de nivellement constitué de la règle 11 et du peigne rotatif 12. L'utilisation, ou pas, du peigne rotatif dépend de la nature du mélange caoutchouc-liant.

Le procédé illustré comprend en outre une étape de pulvérisation d'eau en surface du mélange caoutchouc-polyuréthanne après l'étape de nivellement et avant l'entrée dans la presse 14. L'eau pulvérisée depuis le pulvérisateur 13, au contact du polyuréthanne, va entraîner un durcissement de celui-ci à la température de durcissement de l'étape de compression. Le film d'eau pulvérisé en surface du mélange caoutchouc-polyuréthanne nivelé permet d'initier la réaction de durcissement du polyuréthanne, c'est-à-dire avant que le mélange caoutchouc-polyuréthanne ne durcisse pendant sa compression.

Lorsque le mélange caoutchouc-polyuréthanne nivelé et recouvert du film d'eau liquide avance entre les bandes chauffées par les plaques chauffantes 15, 15' de la presse 14, cette dernière se referme et la compression commence. L'eau liquide chauffée, généralement transformée en vapeur d'eau, va diffuser dans toute l'épaisseur du mélange caoutchouc-polyuréthanne et permettre d'homogénéiser l'initiation de la réaction sur tout le volume du tapis. En même temps, la température va accélérer le durcissement du liant. Un tapis à base de caoutchouc recyclé aggloméré résistant et de qualité uniforme est obtenu.

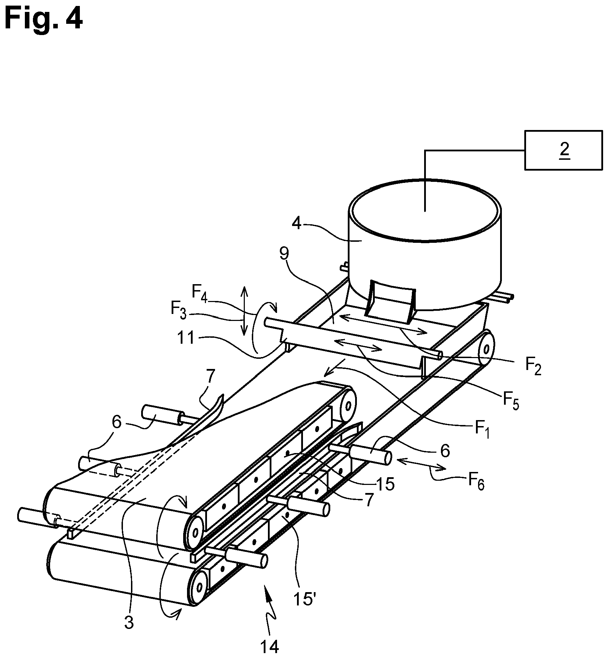

Dans l'exemple illustré de manière schématique sur la figure 4, le mélangeur 4 est alimenté comme sur l'exemple précédent en grains de caoutchouc recyclé et en liant. Il reçoit en outre une amenée d'eau liquide à partir d'une source d'eau quelconque 2, et cette eau est donc mélangée là aux autres constituants. Comme dans l'exemple précédent, le mélangeur est capable de déposer le mélange sur la bande transporteuse en étant déplacé selon un mouvement de va-et-vient transversal suivant la direction F2. Pendant ce temps, le brin supérieur de la bande 9 effectue un déplacement dans le sens F1 ou il reste à l'arrêt.

Pendant l'avancement du mélange caoutchouc-liant sur la bande 9 en cours de déplacement, la règle de nivellement 11 est ajustée en hauteur suivant la direction F3, et elle est éventuellement inclinée par rapport à un plan vertical. Pour ce faire elle est agencée de manière à pouvoir pivoter selon la flèche F4 autour d'un axe horizontal. Enfin on peut prévoir en outre que la règle soit agencée de manière à effectuer elle aussi un mouvement de va-et-vient transversal selon la direction F5.

Le rôle de la règle est double :
- Définir la quantité exacte de matière qu'il faut laisser passer pour obtenir des tapis d'une épaisseur donnée. Cette quantité de matière est obtenue grâce au mouvement vertical qui fixe la hauteur de la règle par rapport au plan de la bande transporteuse.
- Lisser la matière avant compression, ce qui améliore l'homogénéité de la densité du tapis final sur toute la surface. Cette opération de lissage est réalisée grâce à deux paramètres : l'orientation de la règle par rapport au sens d'arrivée de la matière. Cette orientation est obtenue grâce au mouvement de rotation F4. Cette orientation peut varier de 0° (règle à la verticale) à 89° (règle à l'horizontale). Le mouvement en va-et-vient de la règle selon la direction F5 qui aide à la distribution de la matière dans le sens de la largeur, à la manière d'un talochage.

Le mélange passe ensuite dans la presse 14 où il est comprimé suivant une direction verticale entre une bande supérieure 3 et la bande transporteuse 9 qui sont chauffées par les plaques chauffantes 15 et 15'. La presse illustrée comporte en outre, de part et d'autre latéralement, des bords de rive 7, qui ont pour but d'exercer une pression horizontale vers l'intérieur de la presse. Dans l'exemple illustré, ils sont agencés sur des vérins 6 pour pouvoir effectuer un déplacement l'un vers l'autre suivant une direction horizontale F6. Le rôle des bords de rive est de comprimer la matière latéralement afin d'obtenir une densité, aux extrémités latérales du tapis, égale à celle en son centre. Cet effet peut aussi être obtenu par des bords de rive fixes préalablement installés à une distance correspondant à la largeur voulue du tapis.

L'avancement est effectué selon la présente invention pas à pas. Cependant, l'homme de métier pourrait imaginer un avancement continu.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de fabrication d'un tapis à base de caoutchouc recyclé comprenant les étapes de :
- malaxage de caoutchouc recyclé en grains ou en copeaux et d'au moins un liant de manière à obtenir un mélange caoutchouc-liant granulaire,
- transfert dudit mélange caoutchouc-liant sur une bande transporteuse, qui, en déplacement, présente un sens d'avancement,
- compression dudit mélange caoutchouc-liant sur la bande transporteuse à une température de durcissement du mélange caoutchouc-liant, et
- addition d'eau liquide audit mélange caoutchouc-liant avant l'étape de compression, l'eau additionnée entraînant, au contact du liant, un durcissement de celui-ci pendant la compression à ladite température de durcissement, avec obtention d'un tapis à base de caoutchouc recyclé aggloméré,
**caractérisé en ce que** l'étape de transfert comprend un dépôt du mélange caoutchouc-liant sur la bande transporteuse suivant un mouvement de va-et-vient transversalement audit sens d'avancement et **en ce que** ledit procédé comprend, en outre, après cette étape de dépôt, une étape de nivellement dudit mélange caoutchouc-liant sur la bande transporteuse en cours d'avancement, à une épaisseur uniforme prédéterminée.

2. Procédé selon la revendication 1, dans lequel ledit au moins un liant est choisi dans le groupe des liants thermodurcissables liquides.

3. Procédé selon l'une ou l'autre des revendications précédentes, dans lequel l'étape d'addition d'eau liquide s'effectue au cours du malaxage dudit mélange caoutchouc-liant.

4. Procédé selon l'une quelconque des revendications précédentes, dans lequel l'étape d'addition d'eau liquide s'effectue par pulvérisation sur ledit mélange caoutchouc-liant après l'étape de nivellement à ladite épaisseur uniforme prédéterminée et avant l'étape de compression.

5. Procédé selon l'une quelconque des revendications précédentes, dans lequel ledit au moins un liant représente 4 % à 12 % en poids, de préférence 4,5 % à 8 %, et plus particulièrement 5 % à 6,5 %, du mélange caoutchouc-liant.

6. Procédé selon l'une quelconque des revendications précédentes, dans lequel l'étape de nivellement s'effectue par passage du mélange caoutchouc-liant sous une règle, de préférence capable d'effectuer un mouvement de rotation autour d'un axe horizontal et d'être ajustée dans une position inclinée par rapport à un plan vertical.

7. Procédé selon l'une quelconque des revendications précédentes, dans lequel l'étape de nivellement s'effectue par passage du mélange caoutchouc-liant sous une règle effectuant un mouvement de va-et-vient transversalement audit sens d'avancement.

8. Procédé selon l'une quelconque des revendications précédentes, dans lequel l'étape de nivellement comprend un lissage du mélange caoutchouc-liant sur ladite bande transporteuse.

9. Procédé selon l'une quelconque des revendications précédentes, comprenant en outre une étape de découpe dudit tapis à base de caoutchouc recyclé aggloméré obtenu.

10. Procédé suivant l'une quelconque des revendications précédentes, **caractérisé en ce que** l'étape de compression comprend un pressage du mélange caoutchouc-liant simultanément suivant une direction verticale et suivant une direction horizontale.

11. Dispositif de fabrication de tapis à base de caoutchouc recyclé comprenant :
- un mélangeur (4) qui est alimenté en caoutchouc recyclé granulaire ou en copeaux et en au moins un liant, et dans lequel est formé un mélange caoutchouc-liant granulaire,
- une bande transporteuse (9) présentant deux bords longitudinaux (10, 10') et agencée pour transporter ledit mélange caoutchouc-liant vers une presse (14), suivant un sens d'avancement, et
- un système d'addition d'eau liquide audit mélange caoutchouc-liant avant pénétration dans la presse,
ladite presse (14) comprenant une entrée, une sortie, une première bande et une deuxième bande recouvrant respectivement une première plaque et une deuxième plaque chauffantes (15, 15'), et étant agencée pour presser ledit mélange caoutchouc-liant sur la bande transporteuse (9) à une température de durcissement du mélange caoutchouc-liant, et former un tapis à base de caoutchouc recyclé aggloméré,
**caractérisé en ce que** ledit mélangeur (4) est monté de manière déplaçable suivant un mouvement de va-et-vient entre les bords longitudinaux (10, 10') de la bande transporteuse (9), transversalement au sens d'avancement de celle-ci, et est agencé de manière à pouvoir, pendant son déplacement, déposer ledit mélange caoutchouc-liant sur ladite bande transporteuse (9) et **en ce que** ledit dispositif comprend en outre un système de nivellement agencé pour produire un mélange caoutchouc-liant déposé présentant une épaisseur uniforme prédéterminée, avant l'entrée dans la presse.

12. Dispositif selon la revendication 11, dans lequel le système de nivellement comprend au moins une règle (11) en dessous de laquelle le mélange caoutchouc-liant doit passer pendant son transport sur la bande transporteuse (9), cette au moins une règle étant agencée pour réguler le mélange à ladite épaisseur uniforme prédéterminée.

13. Dispositif selon la revendication 12, dans lequel ladite au moins une règle (11) est agencée de manière à pouvoir pivoter autour d'un axe horizontal et être ajustée dans une position inclinée par rapport à un plan vertical.

14. Dispositif selon l'une ou l'autre des revendications 12et 13, dans lequel ladite au moins une règle (11) est agencée de manière à pouvoir effectuer un mouvement de va-et-vient transversalement audit sens d'avancement.

15. Dispositif selon l'une quelconque des revendications 11 à 14, dans lequel le système d'addition d'eau liquide susdit comprend un pulvérisateur d'eau (13), situé au-dessus de ladite bande transporteuse (9), entre ledit système de nivellement et l'entrée de ladite presse (14), ce pulvérisateur d'eau (13) étant agencé pour disperser de l'eau liquide en surface du mélange caoutchouc-liant nivelé, avant sa pénétration dans la presse (14).

16. Dispositif selon l'une quelconque des revendications 11 à 15, dans lequel le malaxeur est alimenté en eau par une source d'eau liquide (2).

17. Dispositif selon l'une quelconque des revendications 11 à 16, dans lequel le système de nivellement comprend au moins un peigne rotatif (12) agencé pour lisser ledit mélange caoutchouc-liant au cours de son nivellement.

18. Dispositif suivant l'une quelconque des revendications 11 à 17, dans lequel la presse comprend des bords de rive (7) capables de presser le mélange caoutchouc-liant suivant une direction horizontale.

19. Dispositif suivant la revendication 18, dans lequel les bords de rive sont déplaçable l'un vers l'autre horizontalement.

20. Dispositif selon l'une quelconque des revendications 11 à 19, comprenant, en outre, une trémie (1) contenant ledit caoutchouc recyclé en grains ou en copeaux et agencée pour déboucher dans le mélangeur (4).

21. Dispositif selon l'une quelconque des revendications 11 à 20, comprenant, en outre, un réservoir (5) qui contient ledit au moins un liant sous forme liquide et qui est muni d'un moyen de pompage (7) agencé pour alimenter le mélangeur (4).

## Patentansprüche

1. Herstellungsverfahren einer Matte aus recyceltem Gummi, umfassend die folgenden Schritte:
- Rühren von recyceltem Gummi in Form von Körnern oder Chips und mindestens einem Bindemittel, um ein kornförmiges Gummi-Bindemittel-Gemisch zu erlangen,
- Übertragen des Gummi-Bindemittel-Gemischs auf ein Förderband, das in Bewegung eine Vorlaufrichtung aufweist,
- Verdichten des Gummi-Bindemittel-Gemischs auf dem Förderband bei einer Härtungstemperatur des Gummi-Bindemittel-Gemischs, und
- Hinzufügen von flüssigem Wasser zu dem Gummi-Bindemittel-Gemisch vor dem Verdichtungsschritt, wobei das hinzugefügte Wasser bei Kontakt mit dem Bindemittel bewirkt, dass dieses während der Verdichtung bei der Härtungstemperatur aushärtet, wodurch eine agglomerierte Matte basierend auf recyceltem Gummi erlangt wird,
**dadurch gekennzeichnet, dass** der Übertragungsschritt ein Ablegen des Gummi-Bindemittel-Gemischs auf dem Förderband in einer hin- und hergehenden Bewegung quer zu der Förderrichtung umfasst, und dass das Verfahren nach diesem Ablegeschritt ferner einen Nivellierschritt des Gummi-Bindemittel-Gemischs auf dem sich bewegenden Förderband auf eine vorbestimmte gleichförmige Stärke umfasst.

2. Verfahren nach Anspruch 1, wobei das mindestens eine Bindemittel ausgewählt ist aus der Gruppe der flüssigen wärmehärtbaren Bindemittel.

3. Verfahren nach dem einen oder anderen der vorherigen Ansprüche, wobei der Schritt eines Hinzufügens von flüssigem Wasser während des Rührens des Gummi-Bindemittel-Gemischs erfolgt.

4. Verfahren nach einem der vorherigen Ansprüche, wobei der Schritt eines Hinzufügens von flüssigem Wasser durch Aufsprühen auf das Gummi-Bindemittel-Gemisch nach dem Nivellierschritt auf die vorbestimmte gleichförmige Stärke und vor dem Verdichtungsschritt erfolgt.

5. Verfahren nach einem der vorherigen Ansprüche, wobei das mindestens eine Bindemittel 4 Gewichts-% bis 12 Gewichts-%, vorzugsweise 4,5 Gewichts-% bis 8 Gewichts-% und bevorzugter 5 Gewichts-% bis 6,5 Gewichts-%, des Gummi-Bindemittel-Gemischs darstellt.

6. Verfahren nach einem der vorherigen Ansprüche, wobei der Nivellierschritt durch Durchlauf des Gummi-Bindemittel-Gemischs unter einer Leiste erfolgt, die vorzugsweise in der Lage ist, eine Drehbewegung um eine horizontale Achse auszuführen und in einer geneigten Position in Bezug auf eine vertikale Ebene eingestellt zu werden.

7. Verfahren nach einem der vorherigen Ansprüche, wobei dem der Nivellierschritt durch Durchlauf des Gummi-Bindemittel-Gemischs unter einer Leiste erfolgt, die eine Hin- und Herbewegung quer zu der Vorlaufrichtung ausführt.

8. Verfahren nach einem der vorherigen Ansprüche, wobei der Nivellierschritt ein Glätten des Gummi-Bindemittel-Gemischs auf dem Förderband umfasst.

9. Verfahren nach einem der vorherigen Ansprüche, ferner umfassend einen Schneideschritt der erlangten Matte aus agglomeriertem recyceltem Gummi.

10. Verfahren nach einem der vorherigen Ansprüche, **dadurch gekennzeichnet, dass** der Verdichtungsschritt ein gleichzeitiges Pressen des Gummi-Bindemittel-Gemisch in einer vertikalen Richtung und in einer horizontalen Richtung umfasst.

11. Herstellungsvorrichtung von Matten aus recyceltem Gummi, umfassend:
- einen Mischer (4), der mit kornförmigem recyceltem Gummi oder Chips und mindestens einem Bindemittel beschickt wird und in dem ein kornförmiges Gummi-Bindemittel-Gemisch gebildet wird,
- ein Förderband (9), das zwei Längskanten (10, 10') aufweist und angeordnet ist, um das Gummi-Bindemittel-Gemisch in einer Vorlaufrichtung zu einer Presse (14) zu transportieren, und
- ein System zum Hinzufügen von flüssigem Wasser zu dem Gummi-Bindemittel-Gemisch vor dem Einlauf in die Presse,
die Presse (14) umfassend einen Einlass, einen Auslass, ein erstes Band und ein zweites Band, die jeweils eine erste und eine zweite Heizplatte (15, 15') abdecken, und angeordnet ist, um das Gummi-Bindemittel-Gemisch bei einer Aushärtungstemperatur des Gummi-Bindemittel-Gemischs auf das Förderband (9) zu pressen und eine Matte basierend auf agglomeriertem recyceltem Gummi zu bilden, **dadurch gekennzeichnet, dass** der Mischer (4) bewegbar in einer Hin- und Herbewegung zwischen den Längskanten (10, 10') des Förderbands (9) quer zu dessen Vorlaufrichtung montiert und angeordnet ist, um während seiner Bewegung das Gummi-Bindemittel-Gemisch auf dem Förderband (9) abzulegen, und dass die Vorrichtung ferner ein Nivelliersystem umfasst, das angeordnet ist, um ein abgelegtes Gummi-Bindemittel-Gemisch zu erzeugen, das eine vorbestimmte gleichförmige Stärke aufweist, bevor es in die Presse eintritt.

12. Vorrichtung nach Anspruch 11, wobei das Nivelliersystem mindestens eine Leiste (11) umfasst, unter der das Gummi-Bindemittel-Gemisch während seines Transports auf dem Förderband (9) verlaufen muss, wobei diese mindestens eine Leiste angeordnet ist, um das Gemisch auf die vorbestimmte gleichförmige Stärke zu regulieren.

13. Vorrichtung nach Anspruch 12, wobei die mindestens eine Leiste (11) angeordnet ist, um um eine horizontale Achse schwenkbar zu sein und in eine Position eingestellt zu werden, die in Bezug auf eine vertikale Ebene geneigt ist.

14. Vorrichtung nach einem der Ansprüche 12 und 13, wobei die mindestens eine Leiste (11) angeordnet ist, um quer zu der Vorlaufrichtung hin- und herbewegt zu werden.

15. Vorrichtung nach einem der Ansprüche 11 bis 14, wobei das oben genannte System zum Hinzufügen von flüssigem Wasser einen Wasserzerstäuber (13) umfasst, der sich oberhalb des Förderbands (9) zwischen dem Nivelliersystem und dem Einlass der Presse (14) befindet, wobei dieser Wasserzerstäuber (13) angeordnet ist, um flüssiges Wasser auf der Oberfläche des nivellierten Gummi-Bindemittel-Gemischs zu verteilen, bevor es in die Presse (14) eintritt.

16. Vorrichtung nach einem der Ansprüche 11 bis 15, wobei der Mischer von einer Quelle für flüssiges Wasser (2) mit Wasser versorgt wird.

17. Vorrichtung nach einem der Ansprüche 11 bis 16, wobei das Nivelliersystem mindestens einen drehenden Kamm (12) umfasst, der angeordnet ist, um das Gummi-Bindemittel-Gemisch während seiner Nivellierung zu glätten.

18. Vorrichtung nach einem der Ansprüche 11 bis 17, wobei die Presse Begrenzungsränder (7) umfasst, die in der Lage sind, das Gummi-Bindemittel-Gemisch in einer horizontalen Richtung zu pressen.

19. Vorrichtung nach Anspruch 18, wobei die Begrenzungsränder horizontal zueinander bewegbar sind.

20. Vorrichtung nach einem der Ansprüche 11 bis 19, ferner umfassend einen Trichter (1), der den recycelten Gummi in Form von Körnern oder Chips enthält und angeordnet ist, um in den Mischer (4) zu münden.

21. Vorrichtung nach einem der Ansprüche 11 bis 20, ferner umfassend einen Behälter (5), der das mindestens eine Bindemittel in flüssiger Form enthält und der mit einer Pumpeinrichtung (7) versehen ist, die angeordnet ist, um den Mischer (4) zu speisen.

## Claims

1. Method for manufacturing a mat made from recycled rubber, comprising the steps of:
- mixing recycled rubber in grains or chips and at least one binder so as to obtain a granular rubber-binder mixture,
- transferring said rubber-binder mixture onto a conveyor belt, which, when moving, has a direction of travel,
- compressing said rubber-binder mixture on the conveyor belt at a hardening temperature of the rubber-binder mixture, and
- adding liquid water to said rubber-binder mixture before the compression step, the added water causing, on contact with the binder, a hardening of the latter during compression at said hardening temperature, with the obtaining of a mat made from agglomerated recycled rubber,
**characterised in that** the transfer step comprises a deposit of the rubber-binder mixture on the conveyor belt following a back-and-forth movement transversely to said direction of travel, and said method further comprises, after this depositing step, a step of levelling said rubber-binder mixture on the conveyor belt during travel, at a predetermined uniform thickness.

2. Method according to claim 1, wherein said at least one binder is chosen from the group of liquid thermosetting binders.

3. Method according to either of the preceding claims, wherein the step of adding liquid water is carried out during the mixing of said rubber-binder mixture.

4. Method according to any one of the preceding claims, wherein the step of adding liquid water is carried out by spraying said rubber-binder mixture after the levelling step at said predetermined uniform thickness and before the compression step.

5. Method according to any one of the preceding claims, wherein said at least one binder represents 4% to 12% by weight, preferably 4.5% to 8%, and more particularly 5% to 6.5%, of the rubber mixture-binder.

6. Method according to any one of the preceding claims, wherein the levelling step is carried out by passing the rubber-binder mixture under a ruler, preferably capable of performing a rotational movement around a horizontal axis and of being adjusted in an inclined position relative to a vertical plane.

7. Method according to any one of the preceding claims, wherein the levelling step is carried out by passing the rubber-binder mixture under a ruler performing a back-and-forth movement transversely to said direction of travel.

8. Method according to any one of the preceding claims, wherein the levelling step comprises a smoothing of the rubber-binder mixture on said conveyor belt.

9. Method according to any one of the preceding claims, further comprising a step of cutting said mat made from obtained agglomerated recycled rubber.

10. Method according to any one of the preceding claims, **characterised in that** the compression step comprises pressing the rubber-binder mixture simultaneously in a vertical direction and in a horizontal direction.

11. Device for manufacturing mats made from recycled rubber, comprising:
- a mixer (4) which is supplied with granular recycled rubber or chips and at least one binder, and in which a granular rubber-binder mixture is formed,
- a conveyor belt (9) having two longitudinal edges (10, 10') and arranged to transport said rubber-binder mixture to a press (14), following a direction of travel, and
- a system for adding liquid water to said rubber-binder mixture before entering the press,
said press (14) comprising an inlet, an outlet, a first belt and a second belt covering respectively a first and a second heating plate (15, 15'), and being arranged to press said rubber-binder mixture onto the conveyor belt (9) at a hardening temperature of the rubber-binder mixture, and to form a mat made from agglomerated recycled rubber,
**characterised in that** said mixer (4) is mounted in a moveable manner following a back-and-forth movement between the longitudinal edges (10, 10') of the conveyor belt (9), transversely to the direction of travel of the latter (9), and is arranged so as to be able, during its movement, to deposit said rubber-binder mixture on said conveyor belt (9) and **in that** said device further comprises a levelling system arranged to produce a deposited rubber-binder mixture having a predetermined uniform thickness, before entering the press.

12. Device according to claim 11, wherein the levelling system comprises at least one ruler (11) below which the rubber-binder mixture must pass during its transport on the conveyor belt (9), this at least one ruler being arranged to regulate the mixture at said predetermined uniform thickness.

13. Device according to claim 12, wherein said at least one ruler (11) is arranged so as to be able to pivot around a horizontal axis and be adjusted in an inclined position relative to a vertical plane.

14. Device according to one of claims 12 and 13, wherein said at least one ruler (11) is arranged so as to be able to perform a back-and-forth movement transversely to said direction of travel.

15. Device according to any one of claims 11 to 14, wherein the aforementioned liquid water addition system comprises a water sprayer (13), located above said conveyor belt (9), between said levelling system and the inlet of said press (14), this water sprayer (13) being arranged to disperse liquid water on the surface of the levelled rubber-binder mixture, before its entry into the press (14).

16. Device according to any one of claims 11 to 15, wherein the mixer is supplied with water by a liquid water source (2).

17. Device according to any one of claims 11 to 16, wherein the levelling system comprises at least one rotary comb (12) arranged to smooth said rubber-binder mixture during the levelling thereof.

18. Device according to any one of claims 11 to 17, wherein the press comprises side rims (7) capable of pressing the rubber-binder mixture in a horizontal direction.

19. Device according to claim 18, wherein the side rims are moveable towards each other horizontally.

20. Device according to any one of claims 11 to 19, further comprising a hopper (1) containing said recycled rubber in grains or chips and arranged to lead into the mixer (4).

21. Device according to any one of claims 11 to 20, further comprising a reservoir (5) which contains said at least one binder in liquid form and which is provided with pumping means (7) arranged to supply the mixer (4).
